# EUROPEAN PATENT SPECIFICATION

(11) **EP 1 542 489 B1**
(45) Date of publication and mention of the grant of the patent: **07.10.2009**
(21) Application number: 04028944.9
(22) Date of filing: 07.12.2004
(51) Int. Cl.: H04W 64/00, G01S 1/68

(54) **Position data obtaining system and method**
System und Verfahren zur Ermittlung von Positionsdaten
Système et procédé pour obtenir des données de position

(30) Priority: 09.12.2003 JP 2003409839
(43) Date of publication of application: 15.06.2005
(73) Proprietor: NEC CORPORATION, Tokyo (JP)
(72) Inventor: Yamada, Tsutomu, Tokyo (JP)
(74) Representative: Vossius & Partner

(56) References cited:
- EP-A- 1 303 155
- JP-A- 2000 180 199
- US-A1- 2002 137 526

## Description

The present invention relates to position data obtaining systems and, more particularly, to position data obtaining systems, which permits, by using short distance radio techniques, to obtain position data even in an underground market or like place incapable of being reached by GPS (global positioning system) signals, and activity history recorders using the same systems.

As portable terminal set or car navigation set, such as portable telephone set or PDA (personal digital assistant), a set having a GPS function to receive radio waves from a plurality of artificial satellites on stationary orbits and obtain position data by carrying out calculations, has been proposed. The portable terminal set is adapted to radio communicate with a number of base stations each having a relatively narrow service area. Thus, the set can obtain its (or its users) position data on the basis of the data of base stations communicated with it and obtain activity history data from the position data.

Techniques of the position data obtaining or activity history recording using such portable terminal set or the like, are disclosed in various literatures. For example, an activity history output device and recording medium capable of reading data from a personal computer are disclosed. The disclosed device and medium are adapted to obtain position data from a GPS or the like with a position data receiving means, obtain the time instant of obtaining the position data with a clock and display a position name corresponding to the position data in time sequence on a display (see JP 2000180199, for instance). As another example, a mobile terminal data providing system and a parking place managing system are disclosed (hereinafter called Literature 2). In this case of disclosure, a plurality of radio/distribution line transfer communication converters for converting very low level output radio communication to distribution line transfer communication and vice versa, are installed on the power distribution line in the facility. These converters can communicate with and specify the positions of mobile terminals and provide data services thereto even in an underground market, a station or like place, which is complicated in shape and difficultly permits radio communication with universal portable terminals.

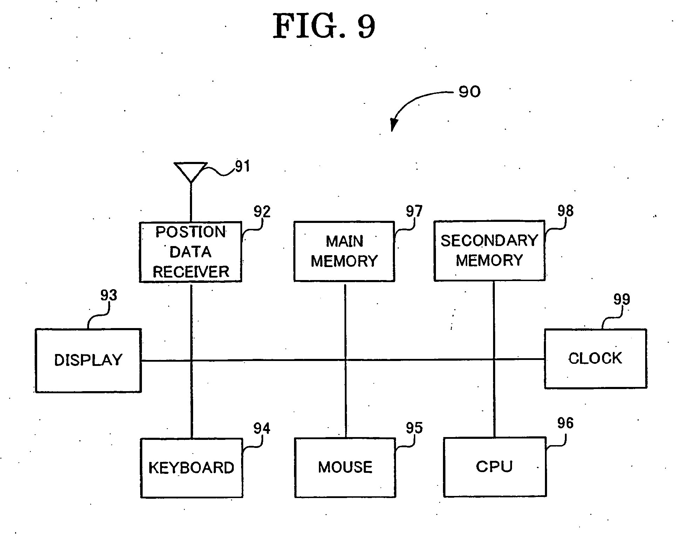

Fig. 9 is a block diagram showing the arrangement of the above prior art activity history recorder disclosed in the Literature 1. This activity history recorder 90 comprises an antenna 91, a position data receiver 92, a display 93, a keyboard 94, a mouse 95, a CPU (central processing unit) 96, a main memory 97, a secondary memory 98 and a clock 99. The elements 92 to 99 are inter-connected via buses for data exchange.

In this activity history recorder 90, the position data recorder 92 receives GPS signal on radio via the antenna 91. The secondary memory 98 stores the position data received by the position data receiver 92. Using the receiver 92, position data is received periodically from GPS under control of the CPU 96, and the obtained position data is recorded together with time data obtained from the clock 99 in the secondary memory 98. When it is required, desired activity history data is obtained with output of the stored position data to the display 93 for display thereon.

In the prior art position data obtaining system described above with reference to Fig. 9, position data is obtained by using GPS signals. However, inanunderground market or like place which is incapable of being reached by GPS signal, it is impossible to obtain position data. Also, a database server is used to obtain correspondence of the position data based on GPS and the position name to each other. Therefore, when correcting the position name, the database in the server also has to be corrected.
Neglecting of the correction leads to the impossibility of obtaining the correspondence of the position data and the position name.

To preclude the above problems, the above prior art techniques as disclosed in the Literature 2 may be used. In this case, it is possible to obtain position data of base stations in the PHS (personal; handy-phone system) Besides, even in an underground market or like place incapable of being reached by radio waves frombase stations, communication is possible by using the radio/distribution line communication converter.

In US-A-2002/0137526, a positional information retrieval method and mobile telephone system is disclosed. EP-A-1 303 155 describes a system, a method and a device for determining the position of a portable device in a wireless communication system.

According to the present invention, there is provided an activity history recorder for recording the activity history produced during movement of the user of a portable terminal in a predetermined area for a predetermined period of time as set out in claim 1, and a position data obtaining method of an activity history recorder system as set out in claim 5.

With the position data obtaining system and the activity history recording system using the same according to the invention, the following practically pronounced effects are obtainable. With a number of position data servers each covering a very narrow service area and installed in underground markets, inside of buildings, etc., it is possible to obtain position data even in places incapable of being reached by GPS signal. Also, since not only the position data of a position data server but also the name of position is transmitted, it is possible to obtain the name corresponding to the position data without need of accessing any position name database. Furthermore, since the position data server can transmit map data as well, the activity history can be grasped at a glance by displaying the map data on the image display.

Other objects and features will be clarified from the following description with reference to attached drawings.
Fig. 1 is a schematic representation of a position data obtaining system as a preferred embodiment of the invention:
Fig. 2 is a block diagram showing the detailed arrangement of an example of the portable terminal 101 shown in Fig. 1;
Fig. 3 is a block diagram showing the detailed arrangement of the position data server 102 shown in Fig. 1:
Fig. 4 is a flowchart showing the potion data obtaining operation according to the embodiment;
Fig. 5 is a flow chart showing detailed operation of the potion data obtaining operation shown in Fig. 4;
Fig. 6 is a flow chart showing the position data transmitting operation according to the embodiment;
Fig. 7 is a block diagram showing the arrangement of a portable terminal used in a second embodiment;
Fig. 8 is a block diagram showing the arrangement of a position data server used in the second embodiment of the invention;
Fig. 9 is a block diagram showing an arrangement of a prior art.

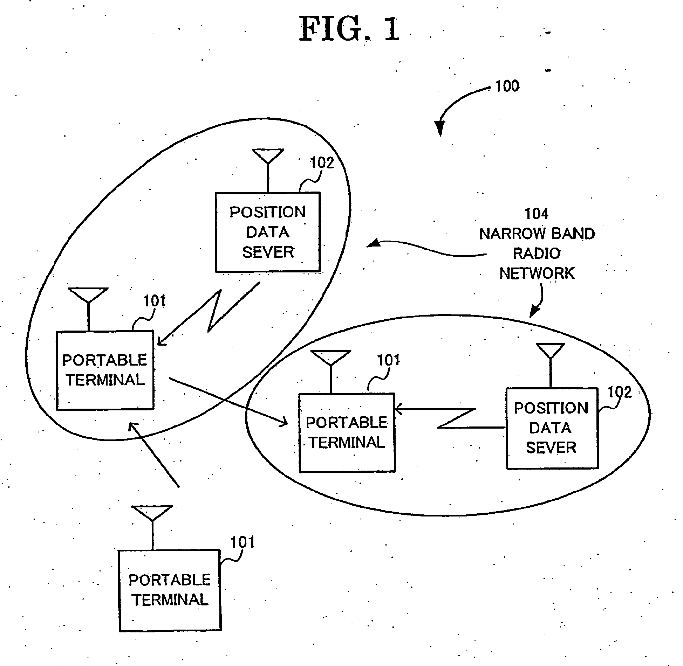

Fig. 1 is a schematic representation of a position data obtaining system as a preferred embodiment of the invention. This position data obtaining system 100 comprises a plurality of narrow band radio networks 104. Each narrow band radio network 104 includes position data servers 102 and 103 and a plurality of portable terminals 101. The position data servers 102 and 103 can provide services to the portable terminals 101.

The position data server 102 is installed in various urban places (such as shops and public facilities), and it is arranged with short-distance radio techniques and radio transmits the position data and name to the portable terminals 101 periodically in a predetermined cycle. Each portable terminal 101 in the narrow service area obtains (i.e., receives) position data and name from the position data server 102, and records these data together with time data of that time instant as activity history. Those data may be displayed on a display, if required.

The position data server 102 also has a radio communication interface in a narrow area for radio communication with the portable terminals 101. The position data server 102 further has an input means (such as a keyboard or a mouth), and can input position data and name of the position. The position data server 102 further has a position data storing unit for storing inputted position data and name.

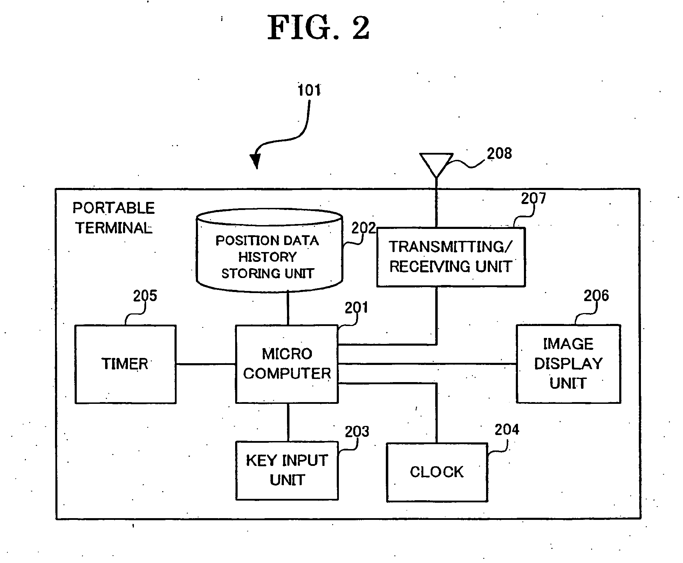

Fig. 2 is a block diagram showing the detailed arrangement of an example of the portable terminal 101 shown in Fig. 1. The portable terminal 101 shown in Fig. 2 includes a microcomputer 201, a position data history storing unit 202, a key input unit 203, a clock 204, a timer 205, an image display 206, a transmitting/receiving unit 207 and an antenna 208. The elements 202 to 207 are connected to the microcomputer 201 and operable under control thereof.

In the portable terminal 101 shown in fig. 2, the position data history recording unit 202 records position data obtained from the position data server 102 or the like via the antenna 208 and the transmitting/receiving unit 207 together with time data obtained from the clock 204. The position data history storing unit 202 is connected to the microcomputer 201, and data is inputted to (i.e., written in) and outputted from (read out from) it according to processes executed in the microcomputer 201. The position data history storing unit 202 is constituted by a semiconductor memory , an HDD (hard disc), etc., and provides a function of a data storing means.

As noted above, to the microcomputer 201 are connected the position data history recording unit 202, the key input unit 203, the clock 204, the timer 205, the image display unit 206 and the transmitting/receiving unit 207. The microcomputer 201 performs, in addition to the data input output controls as noted above, controls according to input data from the key input unit 203, control for obtaining the time data from the clock 204, control of the timer 205, controls of transmission and reception of various data from and in the transmitting/receiving unit 207, controls for displaying these data in the image display unit 206 and control for displaying the results on the image display unit 206.

The key input unit 203 may be of the push-button type or rotary dial type, but these types are by no means limitative. Data specified by the user, such as the position data display request and the position data obtaining request are transmitted to the microcomputer 201. The clock 204 is used for obtaining time data, and transmits the time data in response to a request from the microcomputer 201. The timer 205 provides interruptions to the microcomputer 201 in predetermined time intervals.

The image display unit 206 provides a function as image display means, and it may be such a display panel as an LCD (liquid crystal display) for monochromatic or color display. The liquid crystal display, however, is by no means limitative. The transmitting/receiving unit 207 provides a function as transmitting/receiving means, and it is connected to the antenna 208 and transmits and receives various data by radio communication under control of the microcomputer 201. At the time of the transmission and reception of various data from and in the transmitting/receiving unit 207, the antenna 208 sends out signals received from the transmitting/receiving unit 207 as radio waves. The antenna 208 thus is radio connected to nearby position data servers 102 or the like for radio wave transmission and reception.

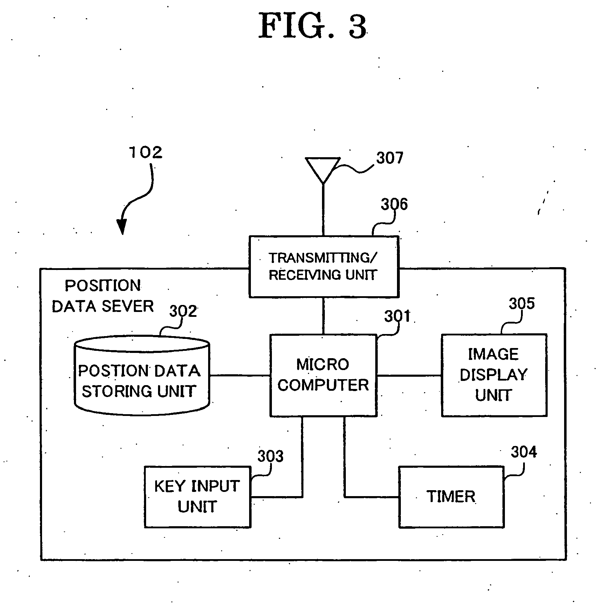

Fig. 3 is a block diagram showing the detailed arrangement of the position data server 102 shown in Fig. 1. The position data server 102 as shown in Fig. 3 includes a microcomputer 301, a position data storing unit 302, a key input unit 303, a timer 304, an image display unit 305, a transmitting/receiving unit 306 and an antenna 307.

In the position data server 102 shown in Fig. 3, the position data storing unit 302 stores position data and name thereof of the position data server 102. The position data storing unit 302 is connected to the microcomputer 301, and data is inputted to and outputted from it according to processes executed in the microcomputer 301. The position data storing unit 302 is constituted by a semiconductor memory, a hard disc, etc., and provides a function as data storing means.

To the microcomputer 301 are connected the position data storing unit 302, the key input unit 303, the timer 304, the image display unit 305 and the transmitting/receiving unit 306. The microcomputer 301 performs, in addition to the various data input output controls noted above, controls according to input data from the key input unit 303, control of the timer 304, controls for transmitting and receiving various data from and in the transmitting/receiving unit 306 and control for displaying the results on the image display unit 305.

The key input unit 303 may be of the push-button type or rotary dial type. These types, however, are by no means limitative. The timer 304 provides interruptions to the microcomputer 201 in predetermined time intervals. The image display unit 305 provides a function as image display means, and it may be a liquid crystal display for monochromatic or color display. The liquid crystal display, however, is by no means limitative.

The transmitting/receiving unit 306 is connected to the antenna 307, and it provides a function as transmitting/receiving means for transmitting and receiving various data by radio communication under control of the microcomputer 301. When the transmitting/receiving unit 306 transmits and receives various data, the antenna 307 sends out signals received from the transmitting/receiving unit 306 as radio waves. The antenna 307 thus is radio connected to nearby portable terminals 101 for radio wave transmission and reception.

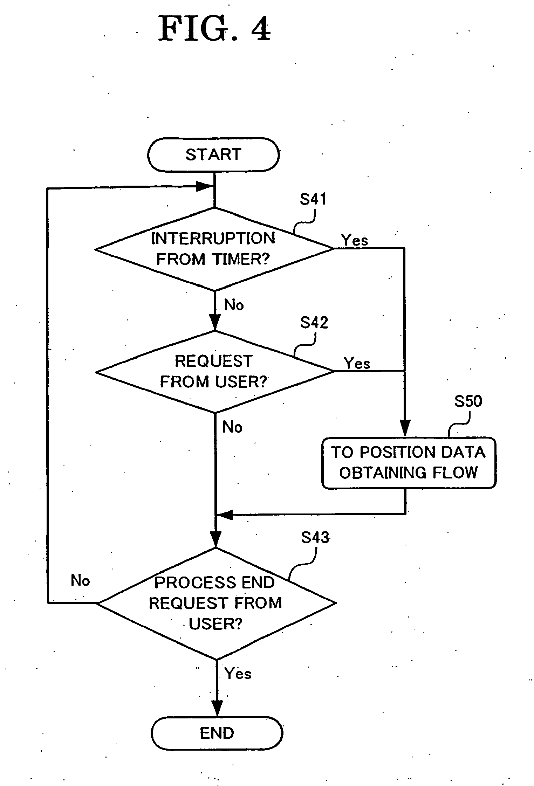

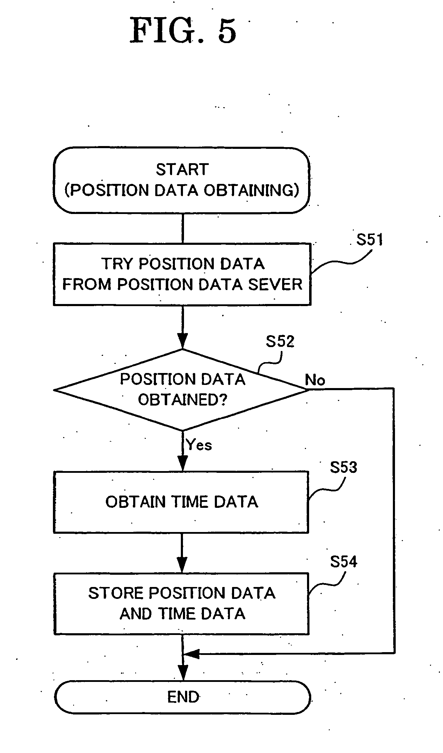

"Position data obtaining operation", in which the portable terminal 101 shown in Fig. 2 obtains position data, will now be described with reference to the flow charts of Figs. 4 and 5. First, the portable terminal 101 checks whether an interruption has been provided from the timer 205 (step S41). When the interruption has been provided ("Yes" in step S41), the portable terminal 101 executes the position data obtaining flow as shown in Fig. 5 (step S50). When the interruption has not been provided ("No" in step S41), the portable terminal 101 checks whether the user has made a position data obtaining request (step S42). When the request has been made ("Yes" in step S42), the portable terminal executes the position data obtaining flow shown in Fig. 5 (step S50). When no request has been made ( "No" in step S42), the portable terminal 101 checks whether the user has made a request for ending the routine (step S43). When no request has been made ("No" in step S43), the portable terminal 101 returns to the step S41 noted above. When the request has been made ("Yes" in step S43), the portable terminal 101 brings an end to the routine.

Now, the position data obtaining flow in the above step S50 will be described in details with reference to the flow chart of Fig. 5. First, the portable terminal 101 tries the "position data obtaining" from the position data server (step S51). When the position data could not have been obtained, that is, when the position data server 102 is not present in the radio communication range ("No" in step S52), the portable terminal 101 brings an end to the routine. When the position data could have been obtained ("Yes" in step S52), the portable terminal 101 obtains time data from the clock 204 in it (step S53). Then, the portable terminal 101 stores the obtained position data and time data as a pair in the position data history storing unit 202 (step S54).

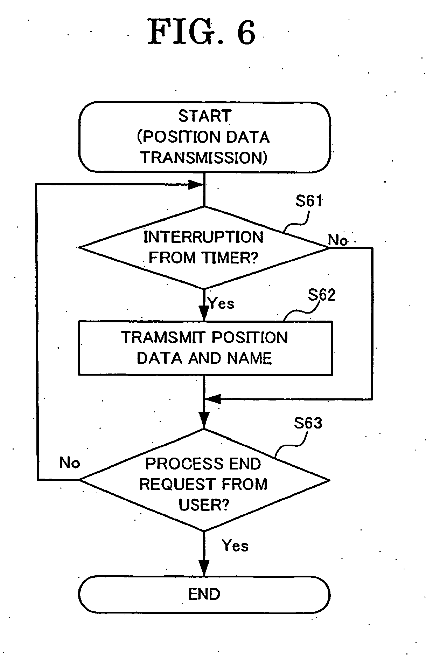

Now, "position data transmitting operation", in which the position data server 102 shown in Fig. 3 transmits position data, will be described with reference to the flow chart shown in Fig. 6. First, the position data server 102 checks whether the interruption from the timer 304 has been provided (step S61). When the interruption has been provided ("Yes" in step S61), the position data server 102 transmits the position data and the name (step S62). Then, the position data server 102 checks whether the user has made a request for ending the routine (step S63). When no request has been made ("No" in step S63), the position data server 102 returns to the step S61. When the request has been made ("Yes" in step S63), the position data server 102 brings an end to the routine.

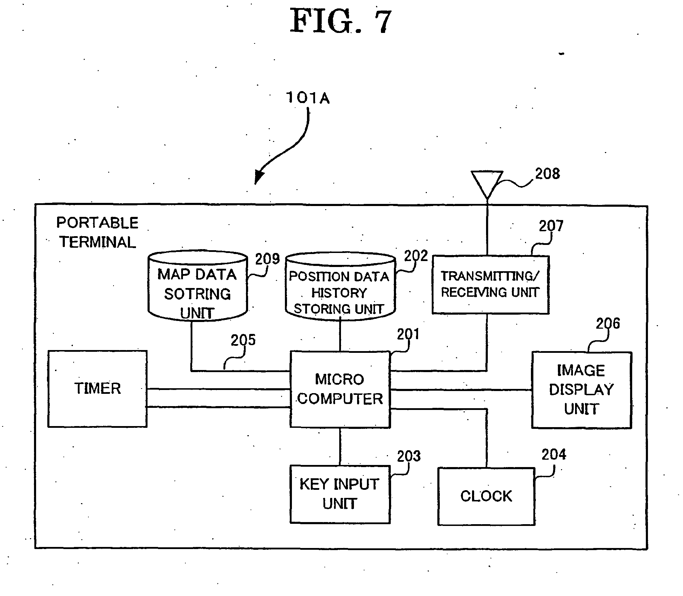

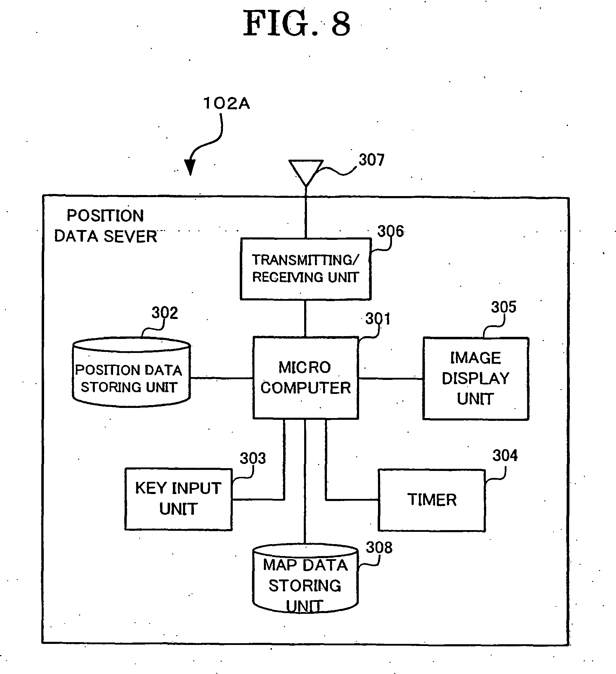

Now, a second embodiment of the invention will be described. This embodiment is the same in the basic arrangement as the preceding embodiment, but it is improved in connection with activity history display. The arrangement of this embodiment is shown in the block diagrams of Figs. 7 and 8. For the sake of the brevity of description, elements like those in the first embodiment are designated by like reference numerals.

Fig. 7 is a block diagram showing the arrangement of a portable terminal used in the second embodiment. This portable terminal 101A includes a microcomputer 201, a position data history storing unit 202, a key input unit 203, a clock 204, a timer 205, an image display unit 206, a transmitting/receiving unit 207, an antenna 208 and a map data storing unit 209. As is obvious from the comparison with the portable terminal 101 in the first embodiment shown in Fig. 2, the portable terminal 101A in the second embodiment further includes the map data storing unit 209. The map data storing unit 209 is constituted by a semiconductor memory, aharddisc, etc., for storing map data, and provides a function as data storing means.

Fig. 8 is a block diagram showing the arrangement of a position data server used in the second embodiment of the invention. The position data server 102A includes a microcomputer 301, a position data storing unit 302, a key input unit 303, a timer 304, an image display unit 305, a transmitting/receiving unit 306, an antenna 307, and a map data storing unit 308. The position data server 102A is different from the position data server 102 of the first embodiment described before with reference to Fig. 3 in that it further includes the map data storing unit 308. In the map data storing unit 308, a map around the position data server 102A is accumulated. The map data storing unit 308 is constituted by a semiconductor memory, a hard disc, etc., and provides a function as a data storing means.

The position data server 102A transmits map data to the portable terminal 101Awhen a request therefrom is made. The portable terminal 101A stores the map data transmitted from the position data server 102 in the map data storing unit 209, and when displaying the activity history, it also displays the stored map data on the map display unit 305. As shown, in the second embodiment the map data is also stored, and thus it is possible to obtain an effect that the display of the activity history can be understood at a glance. The map data is accumulated in each position data server 102A, and the portable terminal 101A need not include any large memory capacity memory.

In the foregoing, preferred embodiments of the position data obtaining system and the activity history recorder using the same according to the invention have been described. According to the invention, the disposition and activity status of vehicles and personals in large facilities or grounds, the car activity status of taxi companies and home distribution dealers and so forth, can be grasped without substantial limitation on the place of activity. The invention thus is applicable to various purposes.

Changes in construction will occur to those skilled in the art and various apparently different modifications and embodiments may be made without departing from the scope of the present invention. The matter set forth in the foregoing description and accompanying drawings is offered by way of illustration only. It is therefore intended that the foregoing description be regarded as illustrative rather than limiting.

## Claims

1. An activity history recorder for recording the activity history produced during movement of the user of a portable terminal (101) in a predetermined area for a predetermined period of time, comprising a number of position data servers (102) each covering and located in various space in a narrow service area and periodically transmitting the own position data and name thereof, wherein said activity history recorder comprises:
a portable terminal (101) present in the service area of any one of the position data servers (102) receives the position data and name thereof transmitted by the position data server (102), stores the received position data and name thereof together with the reception time data as position data history data in its own storing unit, and when it is required, reads out the stored position data history data and displays the read-out data on an image display unit (206).

2. The activity history recorder according to claim 1, wherein the position data servers (102) further transmit map data, and the portable terminal (101) has a map data storing unit (209) for storing the map data received from the pertinent position data server, and displays the stored map data together with the activity history data on the image display unit (206).

3. The activity history recorder according to one of claims 1 and 2, wherein the position data servers (102) each have a key input unit (203) and, when it is required, write or re-write the own position data and name thereof.

4. The activity history recorder according to one of claims 1 to 3, wherein the position data servers (102) are installed in underground markets, inside of buildings, tunnels and like places incapable of receiving GPS signal.

5. A position data obtaining method of an activity history recorder system comprising the steps of:
periodically transmitting position data and name data thereof from a position data server (102) which is communicated with a portable terminal;
receiving by the portable terminal (101) the position data and the name data from the position data server (102);
recording the received position data and name data together with time data obtained by the portable terminal in a memory; and
displaying, if required, the position data, name data and time data on a display (206).

6. The position data obtaining method according to claim 5, wherein
in addition to position data and name data map data thereof are transmitted from said position data server.

7. The position data obtaining method according to claim 5, wherein the received data is recorded together with the time data in response to a request from a timer.

8. The position data obtaining method according to claim 5, wherein the received data is recorded together with the time data in response to a request by a user of the portable terminal.

## Patentansprüche

1. Aktivitätsgeschichts-Aufzeichnungsvorrichtung zum Aufzeichnen der während der Bewegung des Benutzers eines tragbaren Endgeräts (101) in einem vorbestimmten Bereich während eines vorbestimmten Zeitraums erzeugten Aktivitätsgeschichte mit einer Anzahl von Positionsdatenservern (102), die jeweils verschiedene Räume in einem schmalen Dienstbereich abdecken und sich darin befinden und die eigenen Positionsdaten und zugehörigen Namen periodisch senden, wobei die Aktivitätsgeschichts-Aufzeichnungsvorrichtung aufweist:
ein tragbares Endgerät (101), das in dem Dienstbereich von jedem der Positionsdatenserver (102) vorhanden ist und die Positionsdaten und zugehörigen Namen, die vom Positionsdatenserver (102) gesendet wurden, empfängt, die empfangenen Positionsdaten und zugehörigen Namen zusammen mit den Empfangszeitdaten als Positionsdaten-Geschichtsdaten in seiner eigenen Speichereinheit speichert und, wenn es erforderlich ist, die gespeicherten Positionsdaten-Geschichtsdaten ausliest und die ausgelesenen Daten auf einer Bildanzeigeeinheit (206) anzeigt.

2. Aktivitätsgeschichts-Aufzeichnungsvorrichtung nach Anspruch 1, wobei die Positionsdatenserver (102) ferner Kartendaten senden und das tragbare Endgerät (101) eine Kartendaten-Speichereinheit (209) zum Speichern der vom betreffenden Positionsdatenserver empfangenen Kartendaten aufweist und die gespeicherten Kartendaten zusammen mit den Aktivitätsgeschichtsdaten auf der Bildanzeigeeinheit (206) anzeigt.

3. Aktivitätsgeschichts-Aufzeichnungsvorrichtung nach einem der Ansprüche 1 und 2, wobei die Positionsdatenserver (102) jeweils eine Schlüsseleingabeeinheit (203) aufweisen und, wenn es erforderlich ist, die eigenen Positionsdaten und ihren Namen schreiben oder überschreiben.

4. Aktivitätsgeschichts-Aufzeichnungsvorrichtung nach einem der Ansprüche 1 bis 3, wobei die Positionsdatenserver (102) in unterirdischen Märkten, innerhalb von Gebäuden, Tunneln und ähnlichen Plätzen installiert sind, die kein GPS-Signal empfangen können.

5. Verfahren zum Erhalten von Positionsdaten eines Aktivitätsgeschichts-Aufzeichnungssystems mit folgenden Schritten:
periodisches Senden von Positionsdaten und zugehörigen Namensdaten von einem Positionsdatenserver (102), der mit einem tragbaren Endgerät kommuniziert,
Empfangen der Positionsdaten und der Namensdaten von dem Positionsdatenserver (102) durch das tragbare Endgerät (101),
Aufzeichnen der empfangenen Positionsdaten und Namensdaten zusammen mit von dem tragbaren Endgerät erhaltenen Zeitdaten in einem Speicher und
Anzeigen der Positionsdaten, der Namensdaten und der Zeitdaten, falls erforderlich, auf einer Anzeige (206).

6. Verfahren zum Erhalten von Positionsdaten nach Anspruch 5, wobei zusätzlich zu Positionsdaten und Namensdaten Kartendaten von dem Positionsdatenserver gesendet werden.

7. Verfahren zum Erhalten von Positionsdaten nach Anspruch 5, wobei die empfangenen Daten zusammen mit den Zeitdaten ansprechend auf eine Anforderung von einem Zeitgeber aufgezeichnet werden.

8. Verfahren zum Erhalten von Positionsdaten nach Anspruch 5, wobei die empfangenen Daten zusammen mit den Zeitdaten ansprechend auf eine Anforderung von einem Benutzer des tragbaren Endgeräts aufgezeichnet werden.

## Revendications

1. Enregistreur d'historique d'activité pour enregistrer l'historique d'activité produit pendant un mouvement de l'utilisateur d'un terminal portable (101) dans une zone prédéterminée pendant une période de temps prédéterminée, comprenant un certain nombre de serveurs de données de position (102) couvrant et étant situés chacun dans divers espaces dans une zone de service étroite et transmettant périodiquement leurs propres données de position et leur nom, dans lequel ledit enregistreur d'historique d'activité comprend :
un terminal portable (101) présent dans la zone de service de l'un quelconque des serveurs de données de position (102) qui reçoit les données de position et le nom de celui-ci transmis par le serveur de données de position (102), mémorise les données de position reçues et le nom de celui-ci avec les données d'instant de réception en tant que données d'historique de données de position dans sa propre unité de mémorisation et, lorsque cela est nécessaire, extrait les données d'historique de données de position mémorisées et affiche les données extraites sur une unité d'affichage d'image (206).

2. Enregistreur d'historique d'activité selon la revendication 1, dans lequel les serveurs de données de position (102) transmettent en outre des données de carte, et le terminal portable (101) comporte une unité de mémorisation de données de carte (209) pour mémoriser les données de carte reçues du serveur de données de position pertinent, et affiche les données de carte mémorisées avec les données d'historique d'activité sur l'unité d'affichage d'image (206).

3. Enregistreur d'historique d'activité selon l'une des revendications 1 et 2, dans lequel les serveurs de données de position (102) comportent chacun une unité d'entrée à touches (203) et, lorsque cela est nécessaire, écrivent ou réécrivent leurs propres données de position et leur nom.

4. Enregistreur d'historique d'activité selon l'une des revendications 1 à 3, dans lequel les serveurs de données de position (102) sont installés dans des marchés souterrains, à l'intérieur de bâtiments, de tunnels et de lieux similaires incapables de recevoir un signal GPS.

5. Procédé d'obtention de données de position d'un système d'enregistrement d'historique d'activité comprenant les étapes consistant à :
transmettre périodiquement les données de position et les données de nom d'un serveur de données de position (102) qui communique avec un terminal portable ;
recevoir, par le terminal portable (101), les données de position et les données de nom du serveur de données de position (102) ;
enregistrer les données de position et les données de nom reçues avec des données d'instant obtenues par le terminal portable dans une mémoire ; et
afficher, si nécessaire, les données de position, les données de nom et les données d'instant sur un afficheur (206).

6. Procédé d'obtention de données de position selon la revendication 5, dans lequel :
en plus des données de position et des données de nom, des données de carte de celui-ci sont transmises par ledit serveur de données de position.

7. Procédé d'obtention de données de position selon la revendication 5, dans lequel les données reçues sont enregistrées avec les données d'instant en réponse à une demande d'un registre d'horloge.

8. Procédé d'obtention de données de position selon la revendication 5, dans lequel les données reçues sont enregistrées avec les données d'instant en réponse à une demande d'un utilisateur du terminal portable.
